# EUROPÄISCHE PATENTSCHRIFT

(11) **EP 3 602 709 B1**
(45) Veröffentlichungstag und Bekanntmachung des Hinweises auf die Patenterteilung: **24.02.2021**
(21) Anmeldenummer: 18714998.4
(22) Anmeldetag: 22.03.2018
(51) Int. Cl.: H02G 3/04, F16G 13/16, H02G 11/00

(54) **LEITUNGSFÜHRUNGSEINRICHTUNG**
CABLE-ROUTING DEVICE
DISPOSITIF DE GUIDAGE DE LIGNES

(30) Priorität: 31.03.2017 DE 202017101896 U
(43) Veröffentlichungstag der Anmeldung: 05.02.2020
(73) Patentinhaber: Igus GmbH, 51147 Köln (DE)
(72) Erfinder: JAEKER, Thilo-Alexander, 53757 Sankt Augustin (DE); HERMEY, Andreas, 53773 Hennef (DE)
(74) Vertreter: Lippert Stachow Patentanwälte Rechtsanwälte
(86) Internationale Anmeldenummer: PCT/EP2018/057245
(87) Internationale Veröffentlichungsnummer: WO 2018/177862

(56) Entgegenhaltungen:
- EP-A1- 1 160 948
- EP-A2- 1 193 819
- WO-A1-96/35887
- DE-A1-102010 032 920
- DE-U1- 20 305 487

## Beschreibung

Die vorliegende Erfindung betrifft eine Leitungsführungseinrichtung aus gelenkig miteinander verbundenen stirnseitig offenen Gliedern, die in Längsrichtung der Leitungsführungseinrichtung hintereinander angeordnet sind und mittels radial außenseitiger Führungselemente einen Führungskanal zur Aufnahme und Führung von Energie- und/oder Informationsleitungen bilden, wobei die Glieder innerhalb des Führungskanals jeweils einen zentralen Gelenkkörper zur gelenkigen Verbindung unmittelbar benachbarter Glieder aufweisen, der einen Gelenkkopf und eine Gelenkpfanne mit einer Öffnung zum Einsetzen des Gelenkkopfes eines unmittelbar benachbarten Gliedes umfasst, wobei die Gelenkpfanne einen ersten Aufnahmebereich aufweist, in dem der darin eingesetzte Gelenkkopf eines unmittelbar benachbarten Gliedes gegen Verdrehung um die Längsachse der Leitungsführungseinrichtung gesichert ist, und wobei unmittelbar benachbarte Glieder in mindestens zwei unterschiedlichen Abwinkelungsebenen gegenüber der Längsachse der Leitungsführungseinrichtung abwinkelbar sind.

Die radial außenseitigen Führungselemente können sich bogenförmig oder rechteckig um den zentralen Gelenkkörper erstrecken und durch Stege mit dem Gelenkkörper verbunden sein. Die Führungselemente unmittelbar benachbarter Glieder können in einem Abstand voneinander angeordnet sein oder sich gegenseitig überlappen, so dass sie auch bei gegeneinander abgewinkelten Gliedern eine geschlossene, rohrförmige Leitungsführungseinrichtung bilden.

Der Gelenkkopf eines Gelenkkörpers soll in der Gelenkpfanne eines unmittelbar benachbarten Gliedes verrastbar sein, so dass die Gelenkverbindung auf diese wirkende Zugkräfte aufnehmen kann.

Eine Leitungsführungseinrichtung der eingangs genannten Art ist aus der EP 1 193 819 A2 bekannt. Dieses Dokument offenbart eine Leitungsführungseinrichtung aus gelenkig miteinander verbundenen und stirnseitig offenen Gliedern, die in Längsrichtung der Leitungsführungseinrichtung hintereinander angeordnet sind und mittels radial außenseitiger Führungselemente einen Führungskanal zur Aufnahme und Führung von Energie- und/oder Informationsleitungen bilden, wobei die Glieder innerhalb des Führungskanals jeweils einen zentralen Gelenkkörper zur gelenkigen Verbindung unmittelbar benachbarter Glieder aufweisen, der einen Gelenkkopf und eine Gelenkpfanne mit einer Öffnung zum Einsetzen des Gelenkkopfes eines unmittelbar benachbarten Gliedes umfasst, wobei die Gelenkpfanne einen ersten Aufnahmebereich aufweist, in dem der darin eingesetzte Gelenkkopf eines unmittelbar benachbarten Gliedes gegen Verdrehung gesichert ist. Dazu weist der Gelenkkörper in seinem zum benachbarten Glied weisenden Endbereich vorstehende Zapfen auf, die in eine Verriegelungsöffnung im benachbarten Glied eingreifen und die beiden Glieder gegen Verdrehung sichern. Weiterhin sind unmittelbar benachbarte Glieder in mindestens zwei unterschiedlichen Abwinkelungsebenen gegenüber der Längsachse der Leitungsführungseinrichtung abwinkelbar.

Eine Leitungsführungseinrichtung der eingangs genannten Art ist aus der WO 96/35887 bekannt. Bei dem in Figur 6 dieser Druckschrift gezeigten Ausführungsbeispiel weist der kugelförmige Gelenkkopf radial nach außen stehende Zapfen auf, die in zum Rand hin offenen Führungsschlitzen der Gelenkpfanne eines benachbarten Gliedes verdrehungssicher geführt sind. Aufgrund der in den Führungsschlitzen geführten Zapfen, die an dem kugelförmigen Gelenkkopf ein Zapfenkreuz bilden, lässt die Gelenkverbindung zwischen zwei benachbarten Gliedern eine Abwinkelung in zwei senkrecht zueinander stehenden Abwinkelungsebenen zu.

Die aus der genannten Druckschrift bekannte Verdrehsicherung weist den Nachteil auf, dass bei auf die Gelenkverbindungen wirkenden Drehmomenten um die Längsachse der Leitungsführungseinrichtung relativ kleine Seitenflächen der Zapfen und Anlageflächen der Führungsschlitze die Drehmomente aufnehmen müssen und daher die Verdrehsicherung bei größeren auf die Gelenkverbindungen wirkenden Drehmomenten verschleißanfällig ist. Weiterhin ist die seitliche Wandung der Gelenkpfanne im Bereich ihres Aufnahmebereichs für den Gelenkkopf durch die Führungsschlitze unterbrochen, die eine ausreichende Breite zur Aufnahme der die Verdrehsicherung herstellenden Zapfen besitzen müssen. Die entsprechend dem Durchmesser der Zapfen beabstandeten Zungen der Gelenkpfanne können sich bei starken auf die Gelenkverbindung wirkenden Zugkräften aufspreizen, so dass die Gelenkverbindung unter Umständen keine ausreichende Stabilität besitzt. Hinzu kommt, dass beim Zusammensetzen der Glieder eine genaue Justierung der Zapfen des Gelenkkopfes eines Gliedes in Bezug auf die Führungsschlitze in der Gelenkpfanne eines benachbarten Gliedes notwendig ist.

Die EP 1 160 948 A1 offenbart ebenfalls eine Leitungsführungseinrichtung der eingangs genannten Art, wobei die Gelenkpfanne einen ersten Aufnahmebereich aufweist, in dem der darin eingesetzte Gelenkkopf eines unmittelbar benachbarten Gliedes gegen Verdrehung um die Längsachse der Leitungsführungseinrichtung gesichert ist. Die Verdrehsicherung wird dadurch bewirkt, dass von den zentralen Gelenkkörpern sich radial erstreckende, die Leitungen aufnehmende Arme an den aufeinander zuweisenden Stirnseiten unmittelbar benachbarter Glieder ineinander eingreifen.

Aus der DE 10 2010 032 920 A1 ist eine Leitungsführungseinrichtung aus gelenkig miteinander verbundenen und stirnseitig offenen Gliedern bekannt, die in Längsrichtung der Leitungsführungseinrichtung hintereinander angeordnet sind und mittels radial außenliegender Führungselemente einen Führungskanal zur Aufnahme und Führung von Energie- und/oder Informationsleitungen bilden. Die Glieder weisen innerhalb des Führungskanals jeweils einen zentralen Gelenkkörper zur gelenkigen Verbindung unmittelbar benachbarter Glieder auf, der einen Gelenkkopf und eine Gelenkpfanne mit einer Öffnung zum Einsetzen des Gelenkkopfes eines unmittelbar benachbarten Gliedes umfasst. Der Gelenkkopf weist Zapfen auf, die beim Einsetzen des Gelenckopfes in die Gelenkpfanne eines unmittelbar benachbarten Gliedes in Ausnehmungen der Gelenkpfanne eingreifen. Die Zapfen und die Ausnehmungen sind so bemessen, dass die unmittelbar benachbarten Glieder relativ zueinander um die Längsachse in einem begrenzten Verdrehwinkel verdrehbar sind.

Die DE 203 05 487 U1 offenbart eine Leitungsführungseinrichtung aus gelenkig miteinander verbundenen und stirnseitig offenen Gliedern, die in Längsrichtung der Leitungsführungseinrichtung hintereinander angeordnet sind und mittels radial außenseitiger Führungselemente einen Führungskanal zur Aufnahme und Führung von Energie- und/oder Informationsleitungen bilden, wobei die Glieder innerhalb des Führungskanals jeweils einen zentralen Gelenkkörper zur gelenkigen Verbindung unmittelbar benachbarter Glieder aufweisen. Der Gelenkkörper weist ein erstes Gelenkelement in Form einer Halteplatte auf, an der an beiden Seiten Gelenkzapfen vorgesehen sind, und ein zum ersten Gelenkelement korrespondierendes zweites Gelenkelement in Form einer Gabel mit zwei gegenüberliegenden vollumfänglich geschlossenen Laschen. Zwischen den Laschen kann das erste Gelenkelement eines unmittelbar benachbarten Gliedes angeordnet werden, so dass ein einachsiges Achsgelenk an den benachbarten Gliedern hergestellt wird. Die beiden Gelenkachsen eines Gliedes sind um die Längsrichtung der Leitungsführungseinrichtung um einen Winkel gegeneinander verdreht angeordnet.Der vorliegenden Erfindung liegt die Aufgabe zugrunde, die gelenkige Verbindung zwischen dem Gelenkkopf eines Gliedes und der Gelenkpfanne eines unmittelbar benachbarten Gliedes einer Leitungsführungseinrichtung, wobei die unmittelbar benachbarten Glieder in zumindest zwei unterschiedlichen Abwinkelungsebenen abwinkelbar sind und der in die Gelenkpfanne eingesetzte Gelenkkopf gegen Verdrehsicherung um die Längsachse der Leitungsführungseinrichtung gesichert ist, zu verbessern.

Die vorstehende Aufgabe wird erfindungsgemäß dadurch gelöst, dass der Gelenkkopf einen axialen Bereich bezüglich der Längsachse der Leitungsführungseinrichtung aufweist, in dem der Querschnitt des Gelenkkopfes eine Umfangsgeometrie mit mindestens zwei Eckpunkten und diese miteinander verbindenden Seitenlinien aufweist, wobei für alle Eckpunkte der Umfangsgeometrie die an einem Eckpunkt sich treffenden Seitenlinien einen Innenwinkel von kleiner 180° einschließen, und die Gelenkpfanne einen zum axialen Bereich des Gelenkkopfes geometrisch korrespondierenden ersten Aufnahmebereich aufweist, in den der Gelenkkopf einrastbar ist, so dass der mit dem axialen Bereich in dem ersten Aufnahmebereich der Gelenkpfanne eines Gliedes sitzende Gelenkkopf eines unmittelbar benachbarten Gliedes darin unverdrehbar angeordnet und in zumindest zwei unterschiedlichen Abwinkelungsebenen abwinkelbar ist.

Aufgrund der mindestens zwei Eckpunkte und diese miteinander verbindenden Seitenlinien aufweisenden Querschnittsgeometrie des Gelenkkopfes und des Aufnahmebereichs der Gelenkpfanne wird eine Verdrehsicherung ermöglicht, bei der sich im Wesentlichen über den gesamten Umfang des Gelenkkopfes und des Aufnahmebereichs der Gelenkpfanne erstreckende Flächen aneinander anliegen und Drehmomente um die Achsen der Gelenkverbindungen zwischen benachbarten Gliedern aufnehmen. Durch die flächige Anlage wird ein durch Drehmomente verursachter Verschleiß weitestgehend vermieden. Weiterhin ermöglicht die Querschnittsgeometrie eine Selbstjustierung des Gelenkkopfes in Bezug auf den Aufnahmebereich der Gelenkpfanne, da die durch elastisches Aufweiten der Öffnung der Gelenkpfanne beim Einführen des Gelenkkopfes auf dessen Eckpunkte wirkenden Kräfte die Eckpunkte entlang der Seitenlinien des Aufnahmebereichs zu dessen Eckpunkten hin führen.

Die Querschnittsgeometrien des Aufnahmebereichs der Gelenkpfanne und des axialen Bereichs eines in der Gelenkpfanne sitzenden Gelenkkopfes können längs des gesamten axialen Bereichs einander entsprechen. Die Querschnittsgeometrien können auch derart zueinander ähnlich sein, dass sich ein geringes Spiel zwischen dem Aufnahmebereich der Gelenkpfanne und einem in dieser sitzenden Gelenkkopf eines benachbarten Gliedes ergibt. Alternativ können die Querschnittsgeometrien auch derart ähnlich sein, dass der Gelenkkopf eines benachbarten Gliedes mit einem geringen Presssitz im Aufnahmebereich der Gelenkpfanne sitzt.

Die Eckpunkte der Querschnittsgeometrie des Gelenkkopfes und des Aufnahmebereichs der Gelenkpfanne können über die Höhe des axialen Bereichs durchgehende Kanten bilden, zwischen denen sich in Höhenrichtung des axialen Bereichs konvex gekrümmte, insbesondere kreisbogenförmige, Flächen erstrecken.

Bevorzugt sind die zentralen Gelenkkörper so ausgebildet, dass unmittelbar benachbarte Glieder in beliebigen Abwinkelungsebenen, die die Längsachse der Leitungsführungseinrichtung gemeinsam haben, abwinkelbar sind.

Die Gelenkkörper können mit dem Gelenkkopf und der Gelenkaufnahme einstückig ausgebildet, insbesondere aus Kunststoff spritzgegossen sein. Die sich radial außenseitig um den zentralen Gelenkkörper erstreckenden Führungselemente können an den zentralen Gelenkkörper über Stege, z. B. durch Spritzguss, angeformt sein. Um besonderen Anforderungen, z. B. an die Elastizität, Härte, der einzelnen Bauteile eines Gliedes Rechnung zu tragen, können die Glieder auch im Mehrkomponenten-Spritzgießverfahren hergestellt werden.

Der Gelenkkörper eines Gliedes weist vorzugsweise in seinem einen axialen Endbereich den Gelenkkopf und in seinem anderen axialen Endbereich die Gelenkpfanne auf. Der Gelenkkopf kann über einen Hals mit kleinerem Durchmesser mit der Gelenkpfanne verbunden sein.

Die Öffnung der Gelenkpfanne zum Einsetzen des Gelenkkopfes kann an der den ersten Aufnahmebereich aufweisenden axialen Stirnseite des zentralen Gelenkkörpers angeordnet sein.

Die Innenseite des Randbereichs der Öffnung kann eine im geometrischen Sinne ähnliche Umfangsgeometrie zu derjenigen des daran anschließenden ersten Aufnahmebereichs aufweisen, wobei sie eine Verengung gegenüber dem ersten Aufnahmebereich aufweist. Zur Stirnseite der Gelenkpfanne kann sich die Innenseite des Randbereichs der Öffnung zum einfacheren Einbringen und zum möglichen Selbstjustieren des Gelenckopfes in Bezug auf die Umfangsgeometrie des ersten Aufnahmebereichs der Gelenkpfanne nach außen konisch erweitert sein.

Bevorzugt sind die Eckpunkte der Umfangsgeometrie des axialen Bereichs des Gelenkkopfes regelmäßig über die Umfangsgeometrie verteilt.

Weiterhin sind die die Eckpunkte miteinander verbindenden Seitenlinien vorzugsweise konvex gekrümmt.

Insbesondere können alle die Eckpunkte miteinander verbindenden Seitenlinien den gleichen Krümmungsradius besitzen.

Der Krümmungsradius der die Eckpunkte miteinander verbindenden Seitenlinien ist dann größer als der Radius des kleinsten, die Eckpunkte und die Seitenlinien umschließenden Kreises. Insbesondere können die Radien in einem Verhältnis von 5/4-15/4 stehen.

Bevorzugt weist die Umfangsgeometrie des Querschnitts des Gelenkkopfes im axialen Bereich mindestens drei Eckpunkte, insbesondere drei oder vier Eckpunkte, auf.

Die Eckpunkte können abgerundet sein, so dass die daran angrenzenden Seitenlinien im Wesentlichen stetig mit einem kleinen Krümmungsradius ineinander übergehen.

In einer bevorzugten Ausführung ist der zum axialen Bereich des Gelenkkopfes geometrisch korrespondierende erste Aufnahmebereich der Gelenkpfanne in axialer Richtung im Bereich zumindest einer Eckkante von der Öffnung her geschlitzt. Der Schlitz kann eine zu vernachlässigende Breite aufweisen und dient lediglich dazu, dass sich der Randbereich der Öffnung und der sich daran anschließende erste Aufnahmebereich der Gelenkpfanne beim Einführen des Gelenkkopfes elastisch aufweiten können. Insbesondere bei konvexer Krümmung der die Eckpunkte miteinander verbindenden Seitenlinien der Querschnittsgeometrie wirkt aufgrund der elastischen Kräfte auf die entsprechend konvex gekrümmten Seitenflächen des Gelenckopfes ein Drehmoment, wenn der Gelenkkopf in die Öffnung der Gelenkpfanne eingeführt und nicht entsprechend der Umfangsgeometrie der Innenseite des Randbereichs der Öffnung und dem daran anschließenden Aufnahmebereich der Gelenkpfanne justiert ist. Das Drehmoment kann in diesem Falle eine Selbstjustierung auf die Umfangsgeometrie der Innenseite des Randbereichs der Öffnung und des daran anschließenden ersten Aufnahmebereichs der Gelenkpfanne bewirken.

In einer Weiterbildung der Erfindung kann die Gelenkpfanne eines Gliedes der Leitungsführungseinrichtung einen sich an den ersten Aufnahmebereich in von der Öffnung der Gelenkpfanne wegweisender Richtung anschließenden zweiten Aufnahmebereich aufweisen, in den der Gelenkkopf eines unmittelbar benachbarten Gliedes aus dem ersten Aufnahmebereich einrastbar ist, wobei die beiden Glieder so ausgestaltet sind, dass ihre Abwinkelung relativ zueinander in zumindest einer Abwinkelungsrichtung blockiert ist, wenn der Gelenkkopf im zweiten Aufnahmebereich der Gelenkpfanne sitzt.

Der zweite Aufnahmebereich kann vom ersten Aufnahmebereich durch einen Überlappungsbereich getrennt sein, dessen Innendurchmesser kleiner ist als der größte Außendurchmesser des Gelenkkopfes. Der Innendurchmesser dieser Verengung ist bevorzugt größer als der Innendurchmesser der Verengung an der Innenseite des Randbereichs der Öffnung der Gelenkpfanne, um den Gelenkkopf mit einer geringeren Kraft aus der Rastverbindung mit dem zweiten Aufnahmebereich zu entfernen als derjenigen Kraft, die zur Entfernung des Gelenkkopfes aus dem ersten Aufnahmebereich erforderlich ist.

Zum Entfernen des Gelenkkopfes aus der Rastverbindung mit dem ersten Aufnahmebereich der Gelenkpfanne können eine oder mehrere stirnseitig offene Ausnehmungen im Randbereich der Gelenkpfanne vorgesehen sein, durch die ein Werkzeug einführbar ist, das mit einem Ende an dem in der Gelenkpfanne sitzenden Gelenkkopf angreift und den Endbereich der Gelenkpfanne mit der innenseitigen Verengung nach außen aufhebeln kann, um den Gelenkkopf leichter aus der Gelenkpfanne zu entfernen.

Bevorzugt weist der Gelenkkopf einen Hals mit einem gegenüber ihm kleineren Außendurchmesser auf, der über einen sich konisch verbreiternden Bereich mit der Gelenkpfanne verbunden ist, wobei der sich konisch verbreiternde Bereich eine im geometrischen Sinne ähnliche Querschnittsgeometrie aufweist wie der erste Aufnahmebereich der Gelenkpfanne und diese Querschnittsgeometrie mit derjenigen des nach außen konisch erweiterten Bereichs der Öffnung der Gelenkpfanne korrespondiert. Die Gelenkkörper der Glieder sind dann so ausgebildet, dass beim Einbringen des Gelenkkopfes eines Gliedes in den zweiten Aufnahmebereich der Gelenkpfanne eines unmittelbar benachbarten Gliedes der sich an den Hals des Gelenkkopfes anschließende konisch verbreiternde Bereich aufgrund der miteinander korrespondierenden Querschnittsgeometrie mit dem sich nach außen konisch verbreiternden Bereich der Öffnung der Gelenkpfanne zusammenwirkt und eine Verdrehsicherung in dieser Verbindungsstellung der Gelenckörper bewirkt.

Die Verdrehsicherung in dieser Stellung kann alternativ oder zusätzlich dadurch bewirkt werden, dass der zweite Aufnahmebereich und optional auch der verengte Übergangsbereich zwischen dem ersten und zweiten Aufnahmebereich der Gelenkpfanne eine zum ersten Aufnahmebereich ähnliche Querschnittsgeometrie aufweisen.

Die erfindungsgemäße Leitungsführungseinrichtung ist insbesondere zur Aufnahme und Führung von Energie- und/oder Informationsleitungen im Möbelbereich, insbesondere bei Büromöbeln, konzipiert. Sie kann jedoch generell im Gebäudebereich und im Maschinenbau, z. B. in der Robotik eingesetzt werden, insbesondere auch zur Versorgung beweglicher Maschinenteile oder Einheiten mit Energie und/oder Information.

Zwei Ausführungsbeispiele der vorliegenden Erfindung werden im Folgenden anhand der Zeichnung näher erläutert.

In der Zeichnung zeigen:
- Figur 1: eine perspektivische Ansicht eines drei Glieder umfassenden Abschnitts einer Leitungsführungseinrichtung,
- Figur 2: eine Seitenansicht des in Figur 1 dargestellten Abschnittes einer Leitungsführungseinrichtung,
- Figur 3: einen Längsschnitt durch den in Figur 2 dargestellten Abschnitt einer Leitungsführungseinrichtung parallel zur Zeichnungsebene,
- Figur 4: Schnitt längst der Linie A-A in Figur 2,
- Figur 5: eine Seitenansicht eines Gliedes mit gestrichelt gezeichneten verdeckten Linien,
- Figur 6: stirnseitige Ansicht von oben auf das in Figur 5 gezeigte Glied,
- Figur 7: stirnseitige Ansicht von unten auf das in Figur 5 gezeigte Glied,
- Figur 8: Schnitt längs der Linie B-B in Figur 5,
- Figur 9: Schnitt längs der Linie D-D in Figur 8,
- Figur 10: Schnitt längs der Linie E-E in Figur 8,
- Figur 11: eine zweite Ausführung eines Gliedes einer Leitungsführungseinrichtung,
- Figur 12: seitliche Ansicht des in Figur 11 dargestellten Gliedes,
- Figur 13: stirnseitige Ansicht von oben auf das in Figur 12 gezeigte Glied,
- Figur 14: stirnseitige Ansicht von unten auf das in Figur 12 gezeigte Glied,
- Figur 15: Schnitt längs der Linie C-C in Figur 12,
- Figur 16: Schnitt längs der Linie F-F in Figur 15 und
- Figur 17: Schnitt längs der Linie G-G in Figur 15.

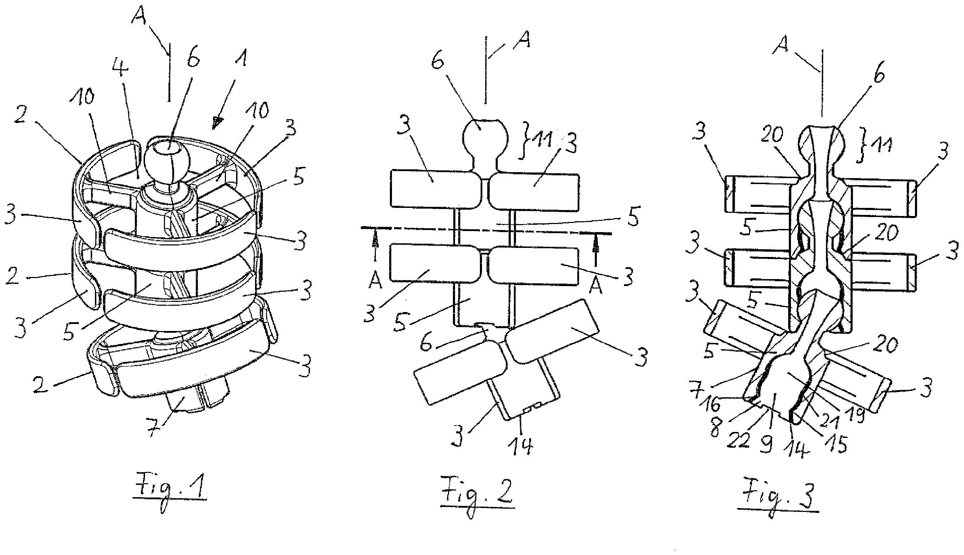

Wie aus dem in Figur 1 gezeigten Abschnitt einer Leitungsführungseinrichtung 1 hervorgeht, setzt sich diese aus gelenkig miteinander verbundenen und stirnseitig offenen Gliedern 2 zusammen, die in Längsrichtung der Leitungsführungseinrichtung hintereinander angeordnet sind und mittels radial außenseitiger Führungselemente 3 einen Führungskanal 4 zur Aufnahme und Führung von in der Zeichnung nicht dargestellten Energie- und/oder Informationsleitungen bilden.

Die Glieder 2 weisen innerhalb des Führungskanals 4 jeweils einen zentralen Gelenkkörper 5 zur gelenkigen Verbindung unmittelbar benachbarter Glieder 2 auf, der einen Gelenkkopf 6 und eine Gelenkpfanne 7 mit einer Öffnung 8 zum Einsetzen des Gelenkkopfes 6 eines unmittelbar benachbarten Gliedes 2 umfasst.

Wie insbesondere aus Figur 3 hervorgeht, weist die Gelenkpfanne 7 einen ersten Aufnahmebereich 9 auf, in dem, wie im Folgenden erläutert wird, der darin eingesetzte Gelenkkopf 6 eines unmittelbar benachbarten Gliedes 2 gegen Verdrehung um die Längsachse der Leitungsführungseinrichtung 1 gesichert ist. In dieser anhand der beiden unteren Glieder in den Figuren 1-3 gezeigten Stellung lassen sich die beiden Glieder in beliebigen Abwinkelungsrichtungsebenen, die die Längsachse A der Leitungsführungseinrichtung gemeinsam haben, gegeneinander abwinkeln.

Wie ebenfalls in den Figuren 1-4 sowie 6 und 7 gezeigt ist, erstrecken sich jeweils drei bogenförmige Führungselemente 3 um den zentralen Gelenkkörper 5, die durch Stege 10 mit dem Gelenkkörper 5 verbunden sind.

Der Gelenkkopf 6 des in den Figuren 1-3 unten gezeigten Gliedes 2 ist im ersten Aufnahmebereich 9 der Gelenkpfanne 7 des darüber angeordneten Gliedes 2 gegen Entfernen aus dem ersten Aufnahmebereich 9 verrastet.

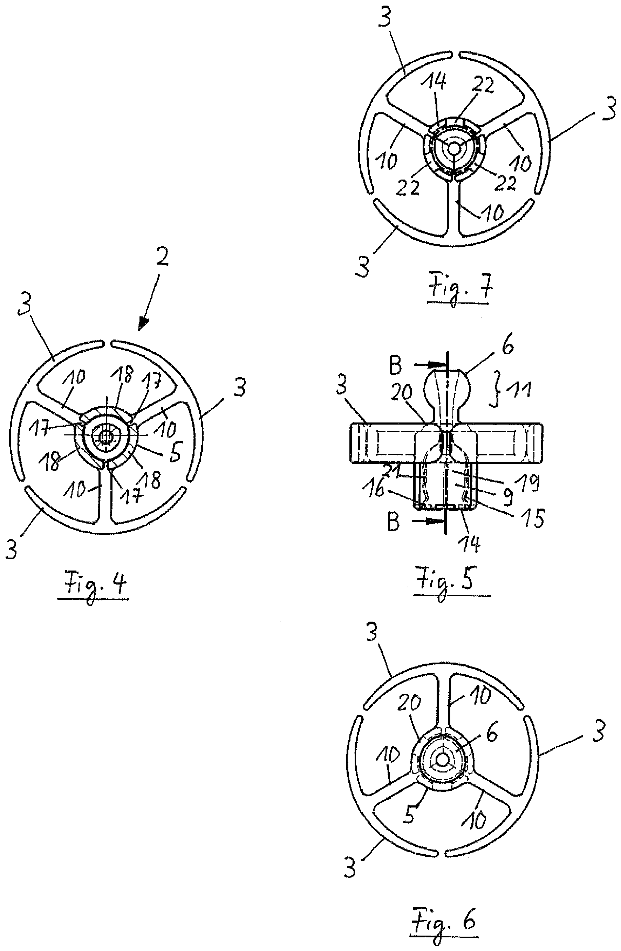

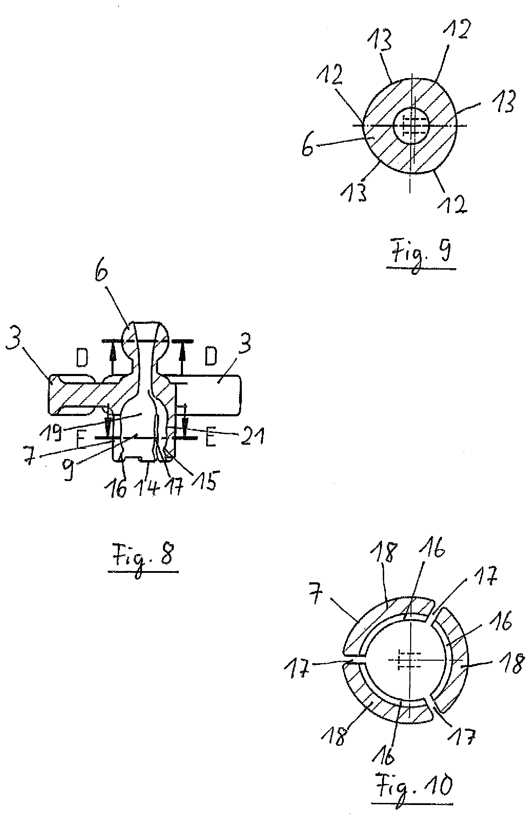

Wie genauer aus den Figuren 4-10 der Zeichnung hervorgeht, weist der Gelenkkopf 6 einen axialen Bereich 11 bezüglich der Längsachse A der Leitungsführungseinrichtung 1 auf, in dem der Querschnitt des Gelenkkopfes 6 (siehe Figur 9) eine Umfangsgeometrie mit mindestens zwei Eckpunkten 12 und diese miteinander verbindenden Seitenlinien 13 aufweist, wobei für alle Eckpunkte 12 der Umfangsgeometrie die an einem Eckunkt 12 sich treffenden Seitenlinien 13 einen Innenwinkel von kleiner 180° einschließen. Die Umfangsgeometrie des Gelenckopfes 6 in dem axialen Bereich 11 korrespondiert mit der Umfangsgeometrie des ersten Aufnahmebereichs 9 der Gelenkpfanne 7, so dass der mit dem axialen Bereich 11 im ersten Aufnahmebereich 9 der Gelenkpfanne 7 eines Gliedes 2 sitzende Gelenkkopf 6 des in den Figuren 1-3 unten angeordneten Gliedes darin unverdrehbar um die Längsachse A der Leitungsführungseinrichtung 1 angeordnet und in beliebigen Abwinkelungsrichtungsebenen gegenüber dem darüber angeordneten Glied 2 abwinkelbar ist.

Die insbesondere aus Figur 9 hervorgehende Umfangsgeometrie des Gelenkkopfes 6 weist in dem betrachteten Ausführungsbeispiel drei regelmäßig über die Umfangsgeometrie verteilte Eckpunkte 12 auf. Die Eckpunkte 12 sind mit gleichlangen konvex gekrümmten Seitenlinien miteinander verbunden. Der Krümmungsradius der konvex gekrümmten Seitenlinien 13 ist größer als der Radius des kleinsten, die Eckpunkte 12 und die Seitenlinien 13 umschließenden Kreises.

Wie insbesondere aus den Figuren 5 und 8 hervorgeht, weist der Gelenkkörper 5 eines Gliedes 2 in seinem einen axialen Endbereich den Gelenkkopf 6 und in seinem anderen axialen Endbereich die Gelenkpfanne 7 auf. Der Gelenkkopf 6 ist über einen Hals mit kleinerem Durchmesser mit der Gelenkpfanne 7 verbunden.

Die Öffnung 8 der Gelenkpfanne 7 zum Einsetzen des Gelenckopfes 6 eines unmittelbar benachbarten Gliedes 2 ist an der den ersten Aufnahmebereich 9 aufweisenden axialen Stirnseite 14 des zentralen Gelenkkörpers 5 angeordnet. Die Innenseite des Randbereichs 15 der Öffnung 8 weist eine im geometrischen Sinne ähnliche Umfangsgeometrie zu derjenigen des daran anschließenden ersten Aufnahmebereichs 9 auf, wobei sie eine Verengung 15 gegenüber dem ersten Aufnahmebereich 9 einschließt. Zur axialen Stirnseite 14 der Gelenkpfanne 7 hin weist die Innenseite einen sich von der Verengung 15 nach außen erstreckenden konisch erweiterten Bereich 16 auf, der ein einfaches Einbringen des Gelenkkopfes 6 in den ersten Aufnahmebereich 9 der Gelenkpfanne 7 und ein dabei erfolgendes Selbstjustieren des Gelenkkopfes 6 in Bezug auf die Umfangsgeometrie des ersten Aufnahmebereichs 9 der Gelenkpfanne 7 ermöglicht.

Wie insbesondere aus den Figuren 7, 8 und 10 hervorgeht, ist die Gelenkpfanne 7 im Bereich der durch die Eckpunkte 12 der Querschnittsgeometrie definierten Eckkanten ihres axialen Aufnahmebereichs 9 geschlitzt. Die Breite der Schlitze 17 ist lediglich durch die Spritzgießfertigung bedingt und kann so klein wie möglich gehalten werden. Die Schlitze 17 unterteilen den geschlitzten Bereich der Gelenkpfanne 7 in drei Zungen 18, die sich beim Einführen des Gelenkkopfes 6 eines unmittelbar benachbarten Gliedes 2 in die Gelenkpfanne 7 elastisch aufweiten. Aufgrund der elastischen Rückstellkräfte wirkt auf die der Querschnittsgeometrie entsprechend konvex gekrümmten Seitenflächen des Gelenkkopfes 6 ein Drehmoment, wenn der Gelenkkopf 6 in die Öffnung 8 der Gelenkpfanne 7 eingeführt wird und nicht entsprechend der Umfangsgeometrie der Innenseite des Randbereichs der Öffnung 8 und dem daran anschließenden ersten Aufnahmebereich 9 der Gelenkpfanne 7 justiert ist. Das Drehmoment bewirkt in diesem Falle eine Selbstjustierung des Gelenkkopfes 6 und der Gelenkpfanne 7 um die Längsachse A der Leitungsführungseinrichtung 1 auf die ihnen gemeinsame Querschnittsgeometrie.

Wie weiterhin aus den Figuren 3, 5 und 8 hervorgeht, weist die Gelenkpfanne 7 eines Gliedes 2 der Leitungsführungseinrichtung 1 einen sich an den ersten Aufnahmebereich 9 in von der Öffnung 8 der Gelenkpfanne 7 wegweisender Richtung anschließenden zweiten Aufnahmebereich 19 auf, in den der Gelenkkopf 6 eines unmittelbar benachbarten Gliedes 2 aus dem ersten Aufnahmebereich 9 einrastbar ist. Die zentralen Gelenkkörper 5 der Glieder 2 sind so ausgestaltet, dass eine Abwinkelung unmittelbar benachbarter Glieder relativ zueinander in jeder Richtung blockiert ist, wenn der Gelenckopf 6 im zweiten Aufnahmebereich 19 der Gelenkpfanne 7 sitzt, wie in den Figuren 1-3 für die beiden oberen Glieder 2 gezeigt ist.

Um in dieser Stellung die beiden unmittelbar benachbarten Glieder 2 ebenfalls gegen ein Verdrehen relativ zueinander um die Längsachse A zu sichern, ist der Hals des Gelenkkopfes 6 über einen sich konisch verbreiternden Bereich 20 mit der in ihrer äußeren Form zylindrischen Gelenkpfanne 7 verbunden. Der sich konisch verbreiternde Bereich 20 weist eine im geometrischen Sinne ähnliche Querschnittsgeometrie bezüglich der Längsachse der Gelenkpfanne 7 auf, wie der erste Aufnahmebereich 9 der Gelenkpfanne 7 und korrespondiert mit der Querschnittsgeometrie des nach außen erweiterten Bereichs 16 der Öffnung 8 der Gelenkpfanne 7.

Die Verdrehsicherung in dieser Stellung kann zusätzlich dadurch bewirkt werden, dass der zweite Aufnahmebereich 19 sowie auch der verengte Übergangsbereich 21 zwischen dem ersten und zweiten Aufnahmebereich der Gelenkpfanne 7 eine mit der Querschnittsgeometrie des axialen Bereichs 11 des Gelenkkopfes 5 im geometrischen Sinne ähnliche Querschnittsgeometrie aufweisen.

Der Innendurchmesser des verengten Übergangsbereichs 21 zwischen dem ersten und zweiten Aufnahmebereich der Gelenkpfanne 7 ist etwas größer als der Innendurchmesser der Verengung 15 an der Innenseite des Randbereichs der Öffnung 8 der Gelenkpfanne 7, um den Gelenkkopf 6 mit einer geringeren Kraft aus der Rastverbindung mit dem zweiten Aufnahmebereich 19 zu entfernen als derjenigen Kraft, die zur Entfernung des Gelenkkopfes 6 aus dem ersten Aufnahmebereich 9 erforderlich ist.

Zum Entfernen des Gelenkkopfes 6 aus der Rastverbindung mit dem ersten Aufnahmebereich 9 der Gelenkpfanne 7 sind stirnseitig offene Ausnehmungen 22 im Randbereich der Zungen 18 der Gelenkpfanne 7 vorgesehen, durch die ein in der Zeichnung nicht dargestelltes Werkzeug einführbar ist, das mit einem Ende an dem in der Gelenkpfanne 7 sitzenden Gelenkkopf 6 angreift und den Endbereich der betreffenden Zunge 18 mit der innenseitigen Verengung 15 nach außen aufhebeln kann, um den Gelenkkopf 6 leichter aus der Gelenkpfanne 7 zu entfernen.

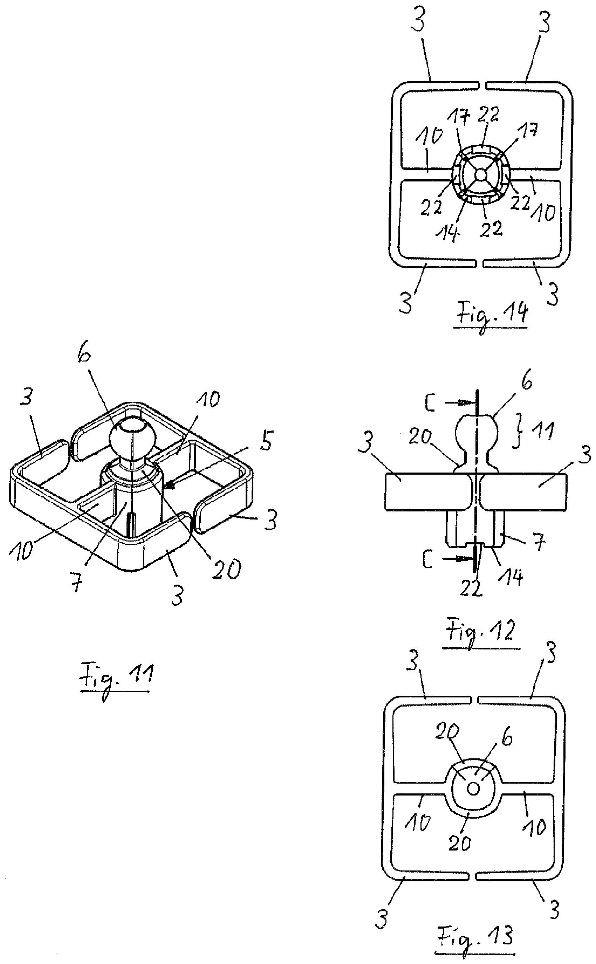

In der Zeichnung stellen die Figuren 11-17 ein zweites Ausführungsbeispiel von Gliedern 2 dar, die wie in Figur 1 des vorstehend beschriebenen ersten Ausführungsbeispiels zu einer Leitungsführungseinrichtung zusammensetzbar sind.

Im Unterschied zum ersten Ausführungsbeispiel sind die sich um die zentralen Gelenkkörper 5 erstreckenden Führungselemente 5 rechteckig ausgebildet, wobei jeweils zwei Führungselemente 3 miteinander verbunden und über einen Steg 10 an dem zentralen Gelenkkörper 5 angeformt sind. Die beiden Stege 10 sind fluchtend zueinander angeordnet und an radial gegenüberliegenden Stellen am zentralen Gelenkkörper 5 angeformt.

Dadurch bietet sich eine etwas andere Umfangsgeometrie des zentralen Gelenkkörpers sowie des ersten und teilweise zweiten Aufnahmebereichs der Gelenkpfanne 7 einschließlich des Übergangsbereichs 21 zwischen den beiden Aufnahmebereichen, der sich in Richtung auf die axiale Stirnseite 14 der Gelenkpfanne 7 an den ersten Aufnahmebereich 9 anschließenden Verengung 15 und des sich an diese anschließenden nach außen erweiterten Bereichs 16 an.

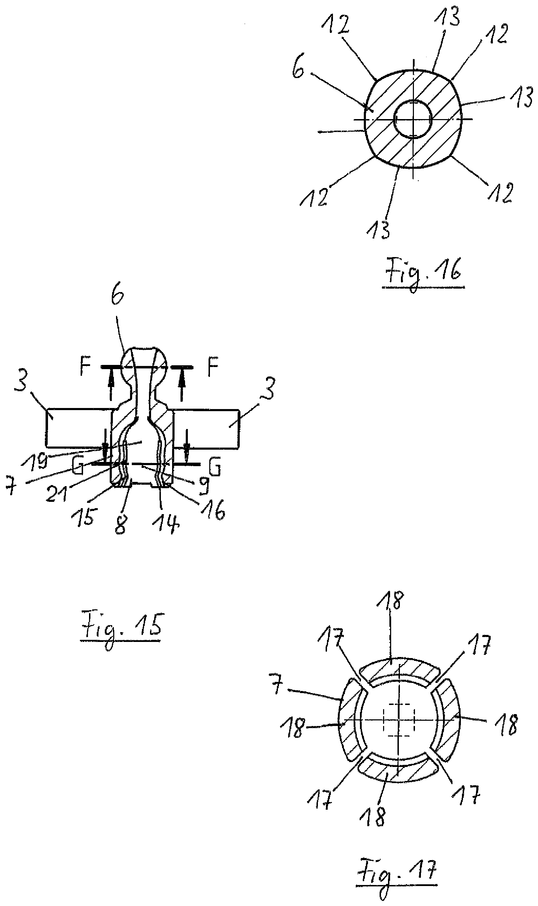

Wie insbesondere aus den Figuren 16 und 7 hervorgeht, weist die Umfangsgeometrie vier regelmäßige Eckpunkte 12 auf, die durch konvex gekrümmte Seitenlinien 13 gleicher Krümmung miteinander verbunden sind. Der Krümmungsradius der Seitenlinien 13 ist wiederum größer als der Radius des kleinsten, die Eckpunkte 12 und die Seitenlinien 13 umschließenden Kreises.

Zweckmäßigerweise sind die den zentralen Gelenkkörper 5 mit den Führungselementen 3 verbindenden Stege 10 im mittleren Bereich der Außenseiten zweier gegenüberliegender Seiten der Gelenkpfanne 7, die wiederum als Zungen 18 ausgebildet sind, angeformt, wie insbesondere aus den Figuren 11, 13 und 14 hervorgeht.

### Bezugszeichenliste

- 1: Leistungsführungseinrichtung
- 2: Glied
- 3: Führungselement
- 4: Führungskanal
- 5: Gelenkkörper
- 6: Gelenkkopf
- 7: Gelenkpfanne
- 8: Öffnung
- 9: erster Aufnahmebereich
- 10: Steg
- 11: axialer Bereich
- 12: Eckpunkt
- 13: Seitenlinie
- 14: axiale Stirnseite
- 15: Verengung
- 16: erweiterter Bereich
- 17: Schlitz
- 18: Zunge
- 19: zweiter Aufnahmebereich
- 20: sich verbreiternder Bereich
- 21: Übergangsbereich
- 22: Ausnehmung
- A: Längsachse der Leitungsführungseinrichtung

## Patentansprüche

1. Leitungsführungseinrichtung (1) aus gelenkig miteinander verbundenen und stirnseitig offenen Gliedern (2), die in Längsrichtung der Leitungsführungseinrichtung (1) hintereinander angeordnet sind und mittels radial außenseitiger Führungselemente (3) einen Führungskanal (4) zur Aufnahme und Führung von Energie- und/oder Informationsleitungen bilden, wobei die Glieder (2) innerhalb des Führungskanals (4) jeweils einen zentralen Gelenkkörper (5) zur gelenkigen Verbindung unmittelbar benachbarter Glieder (2) aufweisen, der einen Gelenckopf (6) und eine Gelenkpfanne (7) mit einer Öffnung (8) zum Einsetzen des Gelenkkopfes (6) eines unmittelbar benachbarten Gliedes (2) umfasst, wobei die Gelenkpfanne (7) einen ersten Aufnahmebereich (9) aufweist, in dem der darin eingesetzte Gelenkkopf (6) eines unmittelbar benachbarten Gliedes (2) gegen Verdrehung um die Längsachse (A) der Leitungsführungseinrichtung (1) gesichert ist, und wobei unmittelbar benachbarte Glieder (2) in mindestens zwei unterschiedlichen Abwinkelungsebenen gegenüber der Längsachse (A) der Leitungsführungseinrichtung (1) abwinkelbar sind, **dadurch gekennzeichnet, dass** der Gelenkkopf (6) einen axialen Bereich (11) bezüglich der Längsachse (A) der Leitungsführungseinrichtung (1) aufweist, in dem der Querschnitt des Gelenkkopfes (6) eine Umfangsgeometrie mit mindestens zwei Eckpunkten (12) und diese miteinander verbindenden Seitenlinien (13) aufweist, wobei für alle Eckpunkte (12) der Umfangsgeometrie die an einem Eckpunkt (12) sich treffenden Seitenlinien (13) einen Innenwinkel von kleiner 180° einschließen, und die Gelenkpfanne (7) einen zum axialen Bereich (11) des Gelenkkopfes (6) geometrisch korrespondierenden ersten Aufnahmebereich (9) aufweist, in denen der Gelenkkopf (6) einrastbar ist, so dass der mit dem axialen Bereich (11) in dem ersten Aufnahmebereich (9) der Gelenkpfanne (7) eines Gliedes (2) sitzende Gelenkkopf (6) eines unmittelbar benachbarten Gliedes (2) darin unverdrehbar angeordnet und in zumindest zwei unterschiedlichen Abwinkelungsebenen abwinkelbar ist.

2. Leitungsführungseinrichtung (1) nach Anspruch 1,
**dadurch gekennzeichnet, dass** die zentralen Gelenckörper (5) so ausgebildet sind, dass unmittelbar benachbarte Glieder (2) in beliebigen Abwinkelungsebenen, die die Längsachse (A) der Leitungsführungseinrichtung (1) gemeinsam haben, abwinkelbar sind.

3. Leitungsführungseinrichtung (1) nach Anspruch 1 oder 2, **dadurch gekennzeichnet, dass** die zentralen Gelenckörper (5) einstückig ausgebildet sind, insbesondere aus Kunststoff spritzgegossen sind.

4. Leitungsführungseinrichtung (1) nach einem der Ansprüche 1-3, **dadurch gekennzeichnet, dass** der Gelenckörper (5) eines Gliedes (2) in seinem einen axialen Endbereich den Gelenkkopf (6) und in seinem anderen axialen Endbereich die Gelenkpfanne (7) aufweist.

5. Leitungsführungseinrichtung (1) nach Anspruch 4, **dadurch gekennzeichnet, dass** die Öffnung (8) der Gelenkpfanne (7) zum Einsetzen des Gelenkkopfes (6) an der den ersten Aufnahmebereich (9) der Gelenkpfanne (7) aufweisenden axialen Stirnseite (14) des zentralen Gelenkkörpers (5) angeordnet ist.

6. Leitungsführungseinrichtung (1) nach einem der Ansprüche 1-5, **dadurch gekennzeichnet, dass** die Innenseite des Randbereichs der Öffnung (8) eine im geometrischen Sinne ähnliche Umfangsgeometrie zu derjenigen des daran anschließenden ersten Aufnahmebereichs (9) aufweist, wobei sie eine Verengung (15) gegenüber dem ersten Aufnahmebereich (9) aufweist.

7. Leitungsführungseinrichtung (1) nach einem der Ansprüche 1-6, **dadurch gekennzeichnet, dass** die Eckpunkte (12) der Umfangsgeometrie des axialen Bereichs (11) des Gelenkkopfes (6) regelmäßig über die Umfangsgeometrie verteilt sind.

8. Leitungsführungseinrichtung (1) nach einem der Ansprüche 1-7, **dadurch gekennzeichnet, dass** die die Eckpunkte (12) miteinander verbindenden Seitenlinien (13) konvex gekrümmt sind.

9. Leitungsführungseinrichtung (1) nach Anspruch 8, **dadurch gekennzeichnet, dass** alle die Eckpunkte (12) miteinander verbindenden Seitenlinien (13) den gleichen Krümmungsradius aufweisen.

10. Leitungsführungseinrichtung (1) nach Anspruch 9,
**dadurch gekennzeichnet, dass** der Krümmungsradius der die Eckpunkte (12) miteinander verbindenden Seitenlinien (13) größer als der Radius des kleinsten, die Eckpunkte (12) und die Seitenlinien (13) umschließenden Kreises ist, wobei die Radien insbesondere in einem Verhältnis von 5/4-15/4 stehen können.

11. Leitungsführungseinrichtung (1) nach einem der Ansprüche 1-10, **dadurch gekennzeichnet, dass** die Umfangsgeometrie des Querschnitts des Gelenkkopfes (6) im axialen Bereich (11) mindestens drei Eckpunkte (12), insbesondere drei oder vier Eckpunkte (12), aufweist.

12. Leitungsführungseinrichtung (1) nach einem der Ansprüche 1-11, **dadurch gekennzeichnet, dass** der zum axialen Bereich (11) des Gelenkkopfes (6) geometrisch korrespondierende erste Aufnahmebereich (9) der Gelenkpfanne (7) in axialer Richtung im Bereich zumindest einer durch die Eckpunkte (12) definierten Ecckannte von der Öffnung (8) her geschlitzt ist.

13. Leitungsführungseinrichtung (1) nach einem der Ansprüche 1-12, **dadurch gekennzeichnet, dass** die Gelenkpfanne (7) eines Gliedes (2) der Leitungsführungseinrichtung (1) einen sich an den ersten Aufnahmebereich (9) in von der Öffnung (8) der Gelenkpfanne (7) wegweisender Richtung anschließenden zweiten Aufnahmebereich (19) aufweist, in den der Gelenkkopf (6) eines unmittelbar benachbarten Gliedes (2) aus dem ersten Aufnahmebereich (9) einrastbar ist, wobei die beiden Glieder (2) so ausgestaltet sind, dass ihre Abwinkelung relativ zueinander in zumindest einer Abwinkelungsrichtung blockiert ist, wenn der Gelenkkopf (6) im zweiten Aufnahmebereich (19) der Gelenkpfanne (7) sitzt.

14. Leitungsführungseinrichtung (1) nach Anspruch 13,
**dadurch gekennzeichnet, dass** der zweite Aufnahmebereich (19) vom ersten Aufnahmebereich (9) durch einen Übergangsbereich (21) getrennt ist, dessen Innendurchmesser kleiner als der größte Außendurchmesser des Gelenkkopfes (6) und größer als der Innendurchmesser der Verengung (15) an der Innenseite des Randbereichs der Öffnung (8) der Gelenkpfanne (7) ist.

15. Leitungsführungseinrichtung (1) nach Anspruch 13 oder 14, **dadurch gekennzeichnet, dass** der Gelenkkopf (6) einen Hals mit einem gegenüber ihm kleineren Außendurchmesser aufweist, der über einen sich konisch verbreiternden Bereich (20) mit der Gelenkpfanne (7) verbunden ist, wobei der sich konisch verbreiternde Bereich (20) eine im geometrischen Sinne ähnliche Querschnittsgeometrie aufweist wie der erste Aufnahmebereich (9) der Gelenkpfanne (7) und diese Querschnittsgeometrie mit derjenigen des nach außen konisch erweiterten Bereichs (16) der Öffnung (8) der Gelenkpfanne (7) korrespondiert.

## Claims

1. Line-guiding device (1) composed of members (2), connected to one another in an articulated manner and open at their end faces, which are arranged one behind the other in the longitudinal direction of the line-guiding device (1) and form, by means of radially outer guide elements (3), a guide channel (4) for receiving and guiding energy and/or information cables, wherein the members (2) each have inside the guide channel (4) a central joint body (5) for the articulated connection of immediately adjacent members (2), which joint body comprises a joint head (6) and a joint socket (7) having an opening (8) for insertion of the joint head (6) of an immediately adjacent member (2), wherein the joint socket (7) comprises a first receiving region (9) in which the joint head (6) inserted therein of an immediately adjacent member (2) is secured against rotation about the longitudinal axis (A) of the line-guiding device (1), and wherein immediately adjacent members (2) can be angled relative to the longitudinal axis (A) of the line-guiding device (1) in at least two different angling planes, **characterized in that** the joint head (6) comprises an axial region (11) relative to the longitudinal axis (A) of the line-guiding device (1) in which the cross-section of the joint head (6) comprises a peripheral geometry with at least two vertices (12) and lateral lines (13) connecting the vertices together, wherein, for all the vertices (12) of the peripheral geometry, the lateral lines (13) meeting at a vertex (12) enclose an internal angle of less than 180°, and the joint socket (7) comprises a first receiving region (9) corresponding geometrically to the axial region (11) of the joint head (6), in which receiving region (9) the joint head (6) can be locked, so that the joint head (6) of an immediately adjacent member (2) seated with the axial region (11) in the first receiving region (9) of the joint socket (7) of a member (2) is arranged non-rotatably therein and can be angled in at least two different angular planes.

2. Line-guiding device (1) according to claim 1,
**characterized in that** the central joint bodies (5) are formed such that immediately adjacent members (2) can be angled in any desired angular planes which have the longitudinal axis (A) of the line-guiding device (1) in common.

3. Line-guiding device (1) according to claim 1 or 2,
**characterized in that** the central joint bodies (5) are formed in one piece, in particular are injection molded from plastics material.

4. Line-guiding device (1) according to any one of claims 1 to 3, **characterized in that** the joint body (5) of a member (2) comprises the joint head (6) in one axial end region and the joint socket (7) in its other axial end region.

5. Line-guiding device (1) according to claim 4,
**characterized in that** the opening (8) of the joint socket (7) for insertion of the joint head (6) is arranged at the axial end face (14) of the central joint body (5) having the first receiving region (9) of the joint socket (7) .

6. Line-guiding device (1) according to any one of claims 1 to 5, **characterized in that** the inside of the edge region of the opening (8) has a peripheral geometry which is similar in the geometrical sense to that of the adjacent first receiving region (9), wherein it comprises a narrowing (15) relative to the first receiving region (9) .

7. Line-guiding device (1) according to any one of claims 1 to 6, **characterized in that** the vertices (12) of the peripheral geometry of the axial region (11) of the joint head (6) are distributed evenly over the peripheral geometry.

8. Line-guiding device (1) according to any one of claims 1 to 7, **characterized in that** the lateral lines (13) connecting the vertices (12) together are convexly curved.

9. Line-guiding device (1) according to claim 8,
**characterized in that** all the lateral lines (13) connecting the vertices (12) together have the same radius of curvature.

10. Line-guiding device (1) according to claim 9,
**characterized in that** the radius of curvature of the lateral lines (13) connecting the vertices (12) together is larger than the radius of the smallest circle enclosing the vertices (12) and the lateral lines (13), wherein the radii can in particular be in a ratio of from 5/4 to 15/4.

11. Line-guiding device (1) according to any one of claims 1 to 10, **characterized in that** the peripheral geometry of the cross-section of the joint head (6) in the axial region (11) comprises at least three vertices (12), in particular three or four vertices (12).

12. Line-guiding device (1) according to any one of claims 1 to 11, **characterized in that** the first receiving region (9), corresponding geometrically to the axial region (11) of the joint head (6), of the joint socket (7) is slotted from the opening (8) in the axial direction in the region of at least one corner edge defined by the vertices (12).

13. Line-guiding device (1) according to any one of claims 1 to 12, **characterized in that** the joint socket (7) of a member (2) of the line-guiding device (1) comprises a second receiving region (19) adjacent to the first receiving region (9) in the direction facing away from the opening (8) of the joint socket (7), in which second receiving region the joint head (6) of an immediately adjacent member (2) can be engaged from the first receiving region (9), wherein the two members (2) are formed such that angling thereof relative to one another is blocked in at least one angling direction when the joint head (6) is seated in the second receiving region (19) of the joint socket (7).

14. Line-guiding device (1) according to claim 13,
**characterized in that** the second receiving region (19) is separated from the first receiving region (9) by a transition region (21), the inside diameter of which is smaller than the largest outside diameter of the joint head (6) and larger than the inside diameter of the narrowing (15) on the inside of the edge region of the opening (8) of the joint socket (7).

15. Line-guiding device (1) according to claim 13 or 14,
**characterized in that** the joint head (6) comprises a neck with a smaller diameter relative to the joint head, which neck is connected to the joint socket (7) *via* a conically widened region (20), wherein the conically widened region (20) has a cross-sectional geometry which is similar in the geometrical sense to that of the first receiving region (9) of the joint socket (7), and that cross-sectional geometry corresponds to that of the outwardly conically widened region (16) of the opening (8) of the joint socket (7).

## Revendications

1. Dispositif de guidage de lignes (1) comprenant des maillons (2) reliés entre eux de manière articulée, ouverts aux extrémités, disposés les uns derrière les autres dans la direction longitudinale du dispositif de guidage de lignes (1) et formant, au moyen d'éléments de guidage (3) radialement extérieurs, un canal de guidage (4) pour recevoir et guider des lignes d'énergie et/ou des lignes d'information, les maillons (2) présentant chacun, à l'intérieur du canal de guidage (4), un corps d'articulation central (5) pour la liaison articulée de maillons (2) directement voisins qui comprend une tête d'articulation (6) et une cavité articulaire (7) avec une ouverture (8) pour l'insertion de la tête d'articulation (6) d'un maillon (2) immédiatement adjacent, la cavité articulaire (7) ayant une première zone de réception (9) dans lequel la tête d'articulation (6) d'un maillon (2) immédiatement adjacent qui y est insérée est empêchée de tourner autour de l'axe longitudinal (A) du dispositif de guidage de ligne (1), et des maillons (2) immédiatement adjacents pouvant être inclinés dans au moins deux plans angulaires différents par rapport à l'axe longitudinal (A) du dispositif de guidage de ligne (1), **caractérisé en ce que** la tête d'articulation (6) présente une zone axiale (11) par rapport à l'axe longitudinal (A) du dispositif de guidage de lignes (1), dans laquelle la section transversale de la tête d'articulation (6) présente une géométrie périphérique avec au moins deux points de bord (12) et des lignes latérales (13) reliant ceux-ci entre eux, les lignes latérales (13) se rencontrant en un point d'angle (12) incluant un angle intérieur inférieur à 180° pour tous les points d'angle (12) de la géométrie périphérique, et la cavité articulaire (7) présente une première zone de réception (9) qui correspond géométriquement à la zone axiale (11) de la tête d'articulation (6) et dans laquelle la tête d'articulation (6) peut être engagée, de sorte que la tête d'articulation (6) d'un maillon (2) immédiatement voisin, qui est placée avec la zone axiale (11) dans la première zone de réception (9) de la cavité articulaire (7) d'un maillon (2) peut être disposée là-dedans de manière non rotative et peut être coudée dans au moins deux plans de coude différents.

2. Dispositif de guidage de lignes (1) selon la revendication 1 ou 2, **caractérisé en ce que** les corps d'articulation centraux (5) sont conçus de telle manière que les maillons (2) directement adjacents peuvent être coudés dans tous les plans angulaires qui ont en commun l'axe longitudinal (A) du dispositif de guidage de ligne (1).

3. Dispositif de guidage de lignes (1) selon la revendication 1 ou 2, **caractérisé en ce que** les corps d'articulation centraux (5) sont formés d'une seule pièce, en particulier sont moulés par injection à partir de plastique.

4. Dispositif de guidage de lignes (1) selon l'une des revendications 1 à 3, **caractérisé en ce que** le corps d'articulation (5) d'un maillon (2) présente la tête d'articulation dans sa zone d'extrémité axiale et la cavité articulaire (7) dans son autre zone d'extrémité axiale.

5. Dispositif de guidage de lignes (1) selon la revendication 4, **caractérisé en ce que** l'ouverture (8) de la cavité articulaire (7) pour l'insertion de la tête d'articulation (6) est disposée sur la face frontale axiale (14) du corps d'articulation central (5), laquelle face frontale présente la première zone de réception (9) de la cavité articulaire (7) .

6. Dispositif de guidage de lignes (1) selon l'une des revendications 1 à 5, **caractérisé en ce que** la face intérieure de la zone de bord de l'ouverture (8) présente une géométrie circonférentielle qui est similaire, dans le sens géométrique, à celle de la première zone de réception (9) qui lui est adjacente, elle présentant un rétrécissement (15) par rapport à la première zone de réception (9).

7. Dispositif de guidage de lignes (1) selon l'une des revendications 1 à 6, **caractérisé en ce que** les points de bord de la géométrie circonférentielle de la zone axiale (11) de la tête d'articulation (6) sont régulièrement répartis sur la géométrie circonférentielle.

8. Dispositif de guidage de lignes (1) selon l'une des revendications 1 à 7, **caractérisé en ce que** les lignes latérales (13) reliant les points de bord (12) entre eux sont courbées de façon convexe.

9. Dispositif de guidage de lignes (1) selon la revendication 8, **caractérisé en ce que** toutes les lignes latérales (13) reliant les points de bord (12) entre eux ont le même rayon de courbure.

10. Dispositif de guidage de lignes (1) selon la revendication 9, **caractérisé en ce que** le rayon de courbure des lignes latérales (13) reliant les points de bord (12) entre eux est supérieur au rayon du plus petit cercle entourant les points de bord (12) et les lignes latérales (13), les rayons pouvant notamment être dans un rapport de 5/4-15/4.

11. Dispositif de guidage de lignes (1) selon l'une des revendications 1 à 10, **caractérisé en ce que** la géométrie circonférentielle de la section transversale de la tête d'articulation (6) dans la zone axiale (11) présente au moins trois points de bord (12), en particulier trois ou quatre points de bord (12).

12. Dispositif de guidage de lignes (1) selon l'une des revendications 1 à 11, **caractérisé en ce que** la première zone de réception (9) de la cavité articulaire (7) qui correspond géométriquement à la zone axiale (11) de la tête d'articulation (6) de la cavité articulaire (7) est fendue en direction axiale dans la zone d'au moins une arête d'angle définie par les points de bord (12) de l'ouverture (8).

13. Dispositif de guidage de lignes (1) selon l'une des revendications 1 à 12, **caractérisé en ce que** la cavité articulaire (7) d'un maillon (2) du dispositif de guidage de lignes (1) présente une deuxième zone de réception (19) qui se raccorde à la première zone de réception (9) dans une direction opposée à l'ouverture (8) de la cavité articulaire (7) et dans laquelle la tête d'articulation (6) d'un maillon (2) immédiatement adjacent de la première zone de réception (9) peut être engagée, les deux maillons (2) étant conçus de telle sorte que leur coude relatif l'un par rapport à l'autre est bloqué dans au moins une direction de coude lorsque la tête d'articulation (6) est placée dans la deuxième zone de réception (19) de la cavité articulaire (7).

14. Dispositif de guidage de lignes (1) selon la revendication 13, **caractérisé en ce que** la deuxième zone de réception (19) est séparée de la première zone de réception (9) par une zone de transition (21) dont le diamètre intérieur est inférieur au plus grand diamètre extérieur de l'extrémité de la tête d'articulation (6) et supérieur au diamètre intérieur du rétrécissement (15) sur le côté intérieur de la zone de bord de l'ouverture (8) de la cavité articulaire (7).

15. Dispositif de guidage de lignes (1) selon la revendication 13 ou 14, **caractérisé en ce que** la tête d'articulation (6) présente un col dont le diamètre extérieur est inférieur à celui de la tête d'articulation (6), lequel col est relié à la cavité articulaire (7) par l'intermédiaire d'une zone (20) s'élargissant coniquement, la zone (20) s'élargissant coniquement présentant une géométrie de section transversale similaire au sens géométrique à celle de la première zone de réception (9) de la cavité articulaire (7) et cette géométrie de section transversale correspondant à celle de la zone (16) de l'ouverture (8) de la cavité articulaire (7) qui s'élargit coniquement vers l'extérieur.
